# EUROPEAN PATENT SPECIFICATION

(11) **EP 3 387 818 B1**
(45) Date of publication and mention of the grant of the patent: **01.06.2022**
(21) Application number: 16709899.5
(22) Date of filing: 29.02.2016
(51) Int. Cl.: H04L 29/08, G06F 9/50, H04W 84/18

(54) **HORIZONTAL NETWORK SLICING IN A WIRELESS NETWORK**
HORIZONTALES NETZWERK-SLICING IN EINEM DRAHTLOSEN NETZWERK
SEGMENTATION DE RÉSEAU HORIZONTALE DANS UN RÉSEAU SANS FIL

(30) Priority: 10.12.2015 US 201562265699 P
(43) Date of publication of application: 17.10.2018
(73) Proprietor: Apple Inc., Cupertino, CA 95014 (US)
(72) Inventor: LI, Qian, Beaverton, OR 97006 (US); WU, Geng, Plano, TX 75025 (US)
(74) Representative: Lang, Johannes
(86) International application number: PCT/US2016/020111
(87) International publication number: WO 2017/099826

(56) References cited:
- MUHAMMAD SHIRAZ ET AL: "A Review on Distributed Application Processing Frameworks in Smart Mobile Devices for Mobile Cloud Computing", IEEE COMMUNICATIONS SURVEYS AND TUTORIALS, INSTITUTE OF ELECTRICAL AND ELECTRONICS ENGINEERS, US, vol. 15, no. 3, 1 July 2013 (2013-07-01), pages 1294-1313, XP011523251, ISSN: 1553-877X, DOI: 10.1109/SURV.2012.111412.00045
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 13)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V13.1.0, 23 September 2015 (2015-09-23), pages 1-254, XP050996156, [retrieved on 2015-09-23]
- FLORES HUBER ET AL: "Mobile code offloading: from concept to practice and beyond", IEEE COMMUNICATIONS MAGAZINE, IEEE SERVICE CENTER, PISCATAWAY, US, vol. 53, no. 3, 1 March 2015 (2015-03-01), pages 80-88, XP011575843, ISSN: 0163-6804, DOI: 10.1109/MCOM.2015.7060486 [retrieved on 2015-03-12]
- "NGMN_5G_White_Paper_V1_0", ETSI DRAFT; NGMN_5G_WHITE_PAPER_V1_0, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SmartM2M - Open, 25 June 2015 (2015-06-25), pages 1-125, XP014258882,

## Description

### TECHNICAL FIELD

Embodiments described herein generally relate to the field of wireless communications systems, and in particular to the sharing of computational resources in a Radio Access Network of a wireless communications system.

### BACKGROUND

Implementations of the example embodiments generally may relate to the field of wireless communications.

The paper "A Review on Distributed Application Processing Frameworks in Smart Mobile Devices for Mobile Cloud Computing" by M. Shiraz et al (IEEE COMMUNICATIONS SURVEYS AND TUTORIALS, vol. 15, no. 3, 1 July 2013) reviews existing Distributed Application Processing Frameworks (DAPFs) for SMDs in MCC domain. The objective is to highlight issues and challenges to existing DAPFs in developing, implementing, and executing computational intensive mobile applications within MCC domain. It proposes thematic taxonomy of current DAPFs, reviews current offloading frameworks by using thematic taxonomy and analyzes the implications and critical aspects of current offloading frameworks. The 3GPP STANDARD; 3GPP TS 36.300, V13.1.0, 23 September 2015 shows a method for transmitting multiplexed data.

The invention is defined in the independent claims. Embodiments of the invention are defined in the dependent claims.

### BRIEF DESCRIPTION OF THE DRAWINGS

Aspects, features and advantages of embodiments of the present disclosure will become apparent from the following description of embodiments in reference to the appended drawings in which like numerals denote like elements and in which:
Figure 1 shows a first view of the broad concept of vertical and horizontal network slicing;
Figure 2 shows a second view of a portion of the wireless network of Figure 1;
Figure 3 shows how a Radio Access Network (RAN) can be sliced into horizontal and vertical slices according to an example that is alternative (or additional) to that shown in Figure 1;
Figure 4 shows a more detailed example of horizontal slicing in a sliceable wireless network architecture according to examples;
Figure 5 shows a device system architecture implementing horizontal slicing and computation resource sharing according to an example;
Figure 6 shows an example of a RAN control entity, or other device, according to embodiments;
Figure 7 shows a first example method of communication in a wireless network according to an embodiment;
Figure 8 shows a second example method of communication in a wireless network, corresponding to the first, according to an embodiment;
Figure 9 shows a third example method of communication in a wireless network according to an embodiment;
Figures 10 shows a fourth example method of communication in a wireless network, corresponding to the third, according to an embodiment;
Figure 11 shows a diagrammatic representation of hardware resources according to an example.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of the example embodiments. However, it will be apparent to those skilled in the art having the benefit of the present disclosure that the various aspects of the example embodiments may be practiced in other examples that depart from these specific details. In certain instances, descriptions of well-known devices, circuits, and methods are omitted so as not to obscure the description of the present example embodiments with unnecessary detail.

In fourth generation Long Term Evolution (4G-LTE) and LTE-Advanced/Pro wireless communications networks, there has been a trend for heterogeneity in the network architecture and applications. Examples of these trends are the development of small cells and relay networks, device-to-device (D2D) communication networks (also known as proximity services), and machine type communications (MTC). Small cells may be considered any form of cell that is smaller than the traditional macro eNB/base station, e.g. micro/pico/femto cells. Moving into fifth generation (5G) wireless communications networks, the trend of heterogeneity may be more prominent, and suitably improved methods and apparatus for control of the wireless resources is desirable. For example, because the 5G wireless communication networks may be expected to serve diverse range of applications (with various traffic types and requirements), network and user equipment (with various communication and computation capabilities), and commercial markets (i.e. use-cases) other than the more traditional voice services (e.g. Voice over LTE, VoLTE) and mobile broadband (MBB), there is a desire to provide control over each of these use-cases, so that an optimized, or at least improved, use of the wireless resources is possible.

Embodiments of the present disclosure generally relate to the slicing of a radio access network (RAN) architecture of a wireless communications network. The RAN may be the portion of the wireless communications network that implements one or more radio access technologies (RATs), and may be considered to reside at a position located between a user device (UE) such as a mobile phone, smartphone, connected laptop, or any remotely controlled (or simply accessible) machine and provides connection with the core network (CN) servicing the wireless communications network. The RAN may be implemented using silicon chip(s) residing in the UEs and/or base stations, such as enhanced Node B (eNBs), base stations, or the like that form the cellular based wireless communications network/system. Examples of RANs include, but are not limited to: GRAN (a GSM radio access network); GERAN (essentially an EDGE enabled GRAN); UTRAN (a UMTS radio access network); and E-UTRAN (an LTE, or LTE-Advance/Pro, high speed and low latency radio access network).

The herein described embodiments discuss the general architecture of network slicing in a radio access network of a wireless communication network, such as but not limited to a 5G wireless communication network. In particular, embodiments may include the concept of horizontal and vertical network slicing. Vertical slicing may comprise slicing the radio access network according to vertical markets, where a vertical market may comprise a single/particular type of communication (i.e. that may be defined as a single or particular use-case for the communications involved), out of the many existing and new types of communication that may be carried out over future wireless communication networks, particularly including the radio access network. A commercial market that may be provisioned over a wireless communications network may also be called a vertical market. The existing types include Mobile Broad Band (MBB) and Voice (VoLTE), while the new types of communication may include new types of connectivity services and use-cases, such machine type communications (MTC), personal area networks, dedicated health networks, machine to machine (M2M), enhanced MBB (eMBB), time critical communications, vehicle communications (V2X) (including vehicle to vehicle (V2V) and vehicle to infrastructure (V2I)), and the like. The definition of a vertical market is not limited, and will cover any existing or future logical separation (i.e. segregation, partition or the like) of a physical radio access network for exclusive use by wireless communications for particular use, or type of communication. In some examples, there may be multiple physical radio access networks in use, each separated into logically separated radio access networks.

The proposed network slices may be programmable and highly scalable and flexible, taking into consideration the availability, latency and power requirements and impact on battery life, reliability, capacity, security and speed of the wireless communications network required by each particular use-case.

Network slicing is considered as one of the key technologies to fulfill the diverse requirements and the diverse services and applications expected to be supported in 5G communication networks. This is because, in wireless communication technologies, further improving the spectral efficiency at the radio link level is becoming increasingly challenging, so new ways have been found to build future wireless networks and devices served by those wireless networks to meet the ever increasing capacity demand. To achieve these goals, 5G and future generations of wireless networks, and in particular the wireless devices serving those, or served by those wireless networks, are evolving, to be about the combination of computing and communications, and the provision of end-to-end solutions. This is a paradigm shift from previous generations where technology development focused primarily on single level communications alone.

To provide the increased capacity in wireless networks, they may be sliced. This may involve slicing (i.e. logically partitioning/separating) the traditional large, single, mobile broadband network into multiple virtual networks to serve vertical industries and applications in a more cost and resource efficient manner. Each network slice may have a different network architecture, and different application, control, packet and signal processing capabilities and capacity, in order to achieve optimum return on investment. New vertical slices (i.e. industry or type of service) can be added to an existing sliceable wireless network at any time, instead of deploying a new dedicated wireless network for that vertical market. Thus, vertical network slicing provides a practical means to segregate the traffic from a vertical application standpoint from the rest of general mobile broadband services, thereby practically avoiding or dramatically simplifying the traditional QoS engineering problem. Wireless network slicing may include slicing in both the core network and the radio access networks (i.e. is an end-to-end solution).

In 5G wireless networks and beyond, the capacity scaling of a network may no longer be as uniform as it has been in previous generations. For example, the scaling factor may be higher when the wireless network is closer to a user, and lower as we move deeper into the infrastructure of the wireless network. This non-uniform scaling may be a result of an augmented user experience enabled by the significantly increased sensing capabilities (and/or processing resources) available at the wireless devices making use of wireless networks. Unlike previous generations of wireless networks where a network serves primarily as a data pipe, scaling uniformly (but singularly) from end-to-end as the air interface improves, 5G and future generations of wireless networks may at least partly rely on information networks comprising diverse (heterogeneous and/or homogeneous) computing, networking and storage capabilities of the wireless networks and the wireless devices they serve/are served by.

For example, the overall wireless network may continue to scale up rapidly, but the computing and networking at the network edge may grow even faster, therefore enabling user data traffic to be processed at the edge of the wireless network (so-called edge cloud applications). User devices may no longer be simply "terminals" that terminate a communication link. Instead, they may become a new generation of moving or fixed networking nodes for a new generation of consumer devices, machines, and things. For example, a laptop, a tablet, a smart phone, a home gateway or any other wireless network device (or component device forming the , or part of the, wireless network device as sold to the consumer), can become a computing and networking center of a network cluster with many devices or things deployed around it. For example, it may form a Personal Area Network (PAN). Many such mobile or fixed wireless network clusters may form what may be called an underlay network, a new type of network in 5G and beyond, with devices capable of communicating with each other or directly with the fixed networks, and with computing able to be offloaded to larger form-factor platforms or edge cloud base stations (i.e. entities in the wireless network with greater processing resources, either outright, or simply available at the that time). This may be done to achieve optimum mobile computing and communication over a virtualized platform across many devices, including the edge cloud.

This new kind of wireless network scaling may be driven by a number of factors. For example, as device sensing is typically local, the processing of sensed data may be local, and the decisions and actions upon sensed data become local. This trend may be further amplified by the proliferation of wearable devices and the internet of things. For example, as machines start playing a greater role in communication than human users, the whole communication link speed may be increased.

The definition of end-to-end is to be revisited, as an increasing number of communication links are in the proximity of users and user devices. It is therefore proposed to provide a cloud architecture framework that may incorporate data centers as well as edge clouds providing local intelligence and services closer to the end users or devices. This may be because, for example, as wireless networks and systems get deployed in enterprise, home, office, factory and automobile, edge cloud servers become more important for both performance and information privacy and security. These latter factors may be driven by user's (and governments) growing concern on privacy and security. Moreover, data centers deep into the fixed networks may continue to grow rapidly since many existing services may be better served with centralized architecture, with the new generation of portable and wearable devices, drones, industrial machines, self-driving cars, and the like fueling even more rapid growth in communication and computing capabilities at the edge of the network and locally around users.

The newly introduced concept of network slicing, particularly of the sort that provides a wireless network system architecture that has End-to-End (E2E) vertical and horizontal network slicing may introduce changes to the air interface, the radio access network (RAN) and the core network (CN) to enable a wireless network system with E2E network slicing.

In simple terms horizontal slicing enhances device capability by allowing computing resources to be shared across devices serving or being served (i.e. in or on) the wireless network, according to the processing needs of those devices over time and space/location. Horizontal network slicing is designed to accommodate the new trend of traffic scaling and enable edge cloud computing and computing offloading: The computing resources in the base station and the portable device may be horizontally sliced, and these slices, together with the wearable devices may be integrated to form a virtual computing platform though a new wireless air interface design as described herein, in order to significantly augment the computing capability of future portable and wearable devices. Horizontal slicing augments device capability and enhances user experience.

Network slicing, in the most general of terms, may be thought of as a way to use virtualization technology to architect, partition and organize computing and communication resources of a physical wireless network infrastructure, into one or more logically separated radio access networks, to enable flexible support of diverse use-case realizations. For example, with network slicing in operation, one physical wireless network may be sliced into multiple logical radio access networks, each architected and optimized for a specific requirement and/or specific application/service (i.e. use-case). Thus, a network slice may be defined as a self-contained, in terms of operation and traffic flow, and may have its own network architecture, engineering mechanisms and network provision. Network slicing as proposed herein is able to simplify the creation and operation of network slices and allows function reuse and resource sharing of the physical wireless network infrastructure (i.e. provides efficiencies), whilst still providing sufficient wireless network resources (communications and processing resources) for the wireless devices served by the wireless network.

Vertical slicing is targeted at supporting diverse services and applications (i.e. use-case/types of communication). Examples include but are not limited to: Wireless/Mobile Broadband (MBB) communications; Extreme Mobile Broadband (E-MBB) communications; Real-time use-case such as Industrial Control communications, Machine-to-Machine communications (MTC/MTC1); non-real-time use-case, such as Internet-of-Things (IoT) sensors communications, or massive-scale Machine-to-Machine communications (M-MTC/MTC2); Ultra Reliable Machine-to-Machine communications (U-MTC); Mobile Edge Cloud, e.g. caching, communications; Vehicle-to-Vehicle (V2V) communications; Vehicle-to-Infrastructure (V2I) communications; Vehicle-to-anything communications (V2X). This is to say, the present disclosure relates to providing network slicing according to any readily definable/distinguishable type of communication that can be carried out over a wireless network. Vertical network slicing enables resource sharing among services and applications, and may avoid or simplify a traditional QoS engineering problem.

Horizontal network slicing, meanwhile, is targeted at extending the capabilities of devices in the wireless network, particularly mobile devices that may have limitations on the local resources available to them, and enhancing user experiences. Horizontal network slicing goes across and beyond the hardware platforms' physical boundaries. Horizontal network slicing enables resource sharing among network nodes and devices, i.e., highly capable network nodes/devices may then share their resources (e.g., computation, communication, storage) to enhance the capabilities of less capable network nodes/devices. A simple example may be to use a network base station and/or a smartphone mobile device, to supplement the processing and communication capabilities of a wearable device. An end result of horizontal network slicing may be to provide a new generation of mobile (e.g. moving) underlay network clusters, where mobile terminals become moving networking nodes. Horizontal slicing may provide over-the-air resource sharing across wireless network nodes. The wireless network air interface in use may be an integrated part and an enabler of horizontal slicing.

Vertical network slicing and horizontal network slicing may form independent slices. The end-to-end traffic flow in a vertical slice may transit between the core network and the terminal devices. The end-to-end traffic flow in a horizontal slice may be local and transit between the client and host of a mobile edge computation service.

In vertical slicing, each of the network nodes may implement similar functions among the separate slices. A dynamic aspect of vertical slicing may lie predominantly in the resource partitioning. In horizontal slicing, however, new functions could be created at a network node when supporting a slice. For example, a portable device may use different functions to support different types of wearable devices. The dynamic aspect of horizontal slicing may therefore lie in the network functions as well as the resource partitioning.

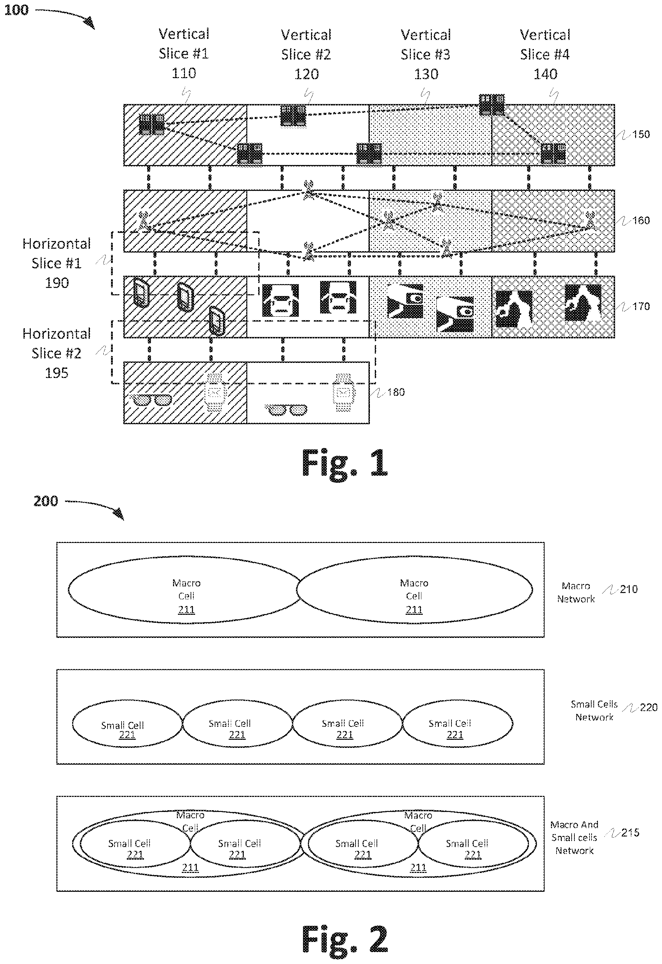

Figure 1 shows a first view of the broad concept of vertical and horizontal network slicing. There is shown a complete wireless network 100, including multiple vertical slices 110 - 140, each serving a different (or at least separate) vertical market, i.e. use-case. In the example shown vertical slice #1 110 serves mobile broadband communications, vertical slice #2 120 serves vehicle-to-vehicle communications, vertical slice #3 130 serves security communications, and vertical slice #4 140 serves industrial control communications. These are only exemplary use-cases, and the use-cases that may be served by sliceable wireless network according to the present disclosure is practically unlimited.

The wireless network 100 includes a core network layer portion 150 (e.g. having multiple servers/control entities/control portions of eNode-Bs, etc.), a radio access network layer portion 160 (e.g. including multiple base stations, e-Node Bs, etc.), a device layer portion 170 (including e.g. portable devices such as UEs, vehicles, surveillance devices, industrial devices, etc.), and a personal/wearable layer portion 180 (including, e.g. wearable devices such as smart watches, health monitors, Google^{™} glasses/Microsoft^{™} Hololens type devices, and the like). The wearable portion may only be involved in some use-cases, as shown by its inclusion in only vertical slices #1 and #2 in the example of Figure 1.

In the vertical domain, the physical computation/storage/radio processing resources in the network infrastructure (as denoted by the servers and base stations 150/160) and the physical radio resources (in terms of time, frequency, and space) are sliced, by use-case (i.e. type of communication) to form end-to-end vertical slices. In the horizontal domain, the physical resources (in terms of computation, storage, radio) in adjacent layers of the network hierarchy are sliced to form horizontal slices. In the example shown, there is a first horizontal network slice 190 operating between the RAN 160 and Device 170 layers, and a second horizontal network slice 195 operating between the Device 170 and wearable 180 layers. Any given device served or to be served by the wireless network 100 as a whole, and the RAN 160 (and below layers) in particular, could operate on multiple network slices, of either (or both) types. For instance, a smart phone can operation in a vertical slice on mobile broad band (MBB) service, a vertical slice on health care service and a horizontal slice supporting wearable devices.

When enabling network slicing in the RAN (including the air interfaces employed in the RAN), besides meeting the 5G requirements (e.g., data rate, latency, number of connections, etc.), further desirable features of the RAN/air interfaces used to enable network slicing and in general 5G may include Flexibility (i.e. support flexible radio resource allocation among slices); Scalability (i.e. easily scale up with the addition of new slices; and Efficiency (e.g. efficiently use the radio and energy resources).

Horizontal slicing may comprise slicing the network hierarchy, e.g. the layers of network connectivity and compute (i.e. processing resource) capability. This may be done across any number of the vertical slices served by the network 100, for example anything from all the vertical markets down to within a one or more vertical slice(s). This is shown as the different widths of the two exemplary horizontal slices in Figure 1 - horizontal slice #1 190 is limited to a single vertical slice, whereas horizontal slice #2 is covers two vertical slices. Examples of network hierarchy/layers may include, but is not limited to, a macro network layer, a micro/small cell network layer, a device to device communications layer, and the like. Other network layers may also be involved.

Figure 2 shows a second view 200 of a portion of the wireless network 100 of Figure 1. In particular, Figure 2 shows an example of a slice-specific RAN architecture, where slices may be across multiple levels of the traditional wireless network architecture. For example, depending on factors such as traffic type, traffic load, QoS requirement, the RAN architecture of each of the slices may be dynamically configured. In a first example, slice #1 210 may only operate on the macro cell level. Whereas slice #2 220 only operates on the small cells level. Finally, slice #3 230 may operate on both macro and small cells levels. In another example, a slice (e.g. slice #1 210) may open up operation on small cells while another slice (e.g. slice #3 230) may close operation on some of the small cells. Opening up operation/activating a slice may be referenced as a network slice turn-on, and closing operation/deactivating a slice may be referenced as a network slice turn-off. The slice-specific RAN architecture may require slice-specific control-plane/user-plane operation, slice on/off operation and slice-based treatment on access control and load balancing, as will be discussed in more detail below.

Horizontal slicing comprising slicing the network/device computation and communication resources may achieve computation offloading. Examples include the base station using a slice of its computation resource to help a user device's computation, or a user device (e.g. smartphone) using a slice of its computation resource to help computation of an associated wearable device(s).

Embodiments of the present disclosure are not limited to any particular form of slicing in the vertical (markets) or horizontal (network hierarchy/layers) directions. Embodiments of the present disclosure may provide a management entity operable across the Control-plane (C-plane) and/or User-plane (U-plane), that may provide a management-plane entity that may be used to coordinate the operation of the different slices, either horizontal or vertical (or multiple/combined, or partial, ones thereof). The management entity may use a flat management architecture or a hierarchal management architecture.

Slicing of the radio access network may be considered as compartmentalization of the radio access network according to predetermined vertical markets, or horizontal network layers (or multiple/partial layers) of the network. This may be considered a form of logical separation between the wireless resources provided by, or in use by, the radio access network. Logical separation of the wireless resources may allow that they may be separately defined, managed, and/or (generally or specifically) resourced. This separation may provide the ability for the different slices to not be able to, or allowed to, affect one another. Equally, in some embodiments, one or more slices may be specifically provided with the ability to manage another one or more slices, for operational reasons.

In some embodiments network functions may be fully offloaded to a network slice, and the slice may operate in a standalone mode, for example a standalone millimeter-wave (mmWave) small cell network, and an out-of-coverage D2D network. A mmWave small cell is one that uses milli-meter size radio waves (i.e. high frequency - e.g. 60GHz).

In some embodiments network function(s) may be partially offloaded to a slice, and the slice may operate in a non-standalone mode, for example in an anchor-booster architecture, where an anchor-booster architecture may comprise an anchor cell, providing a control-plane and a mobility anchor for maintaining connectivity. In an embodiment, the anchor cell may be a cell with wide coverage, for example a macro cell. The anchor-booster architecture may further comprise a booster cell, providing user-plane data offloading. In an embodiment, the booster cell may be a small cell, and may be deployed under the coverage of an anchor cell. From a device perspective, the control-plane and user-plane may be decoupled, i.e., the control-plane may be maintained at the anchor cell while the data-plane may be maintained at the booster cell.

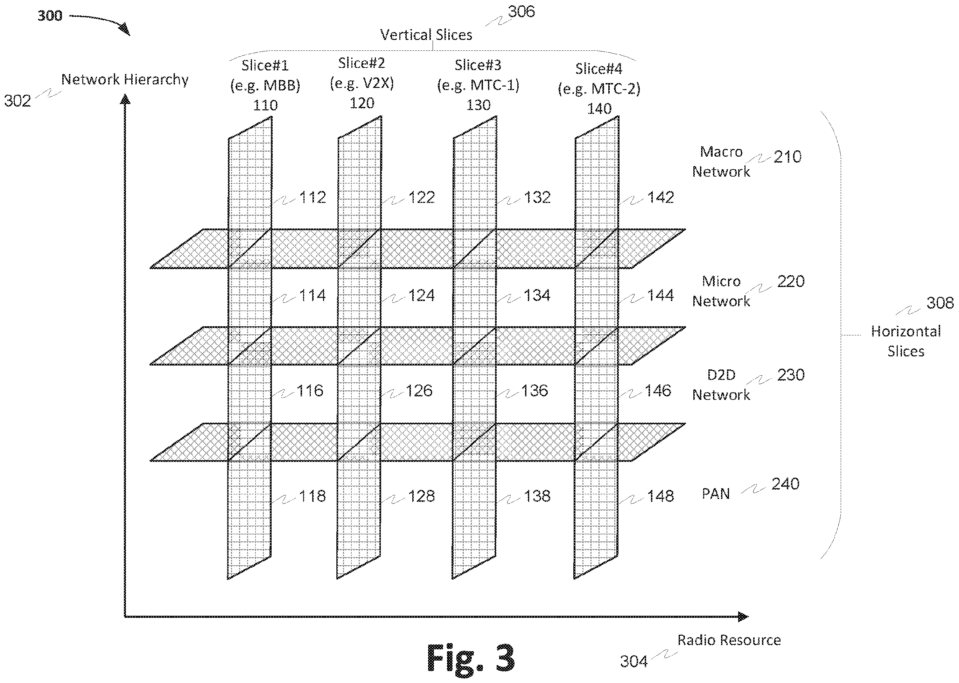

In some example embodiments, the horizontal slices and vertical slices may be viewed as intertwined (i.e. where the radio access network functions/resources are shared among some of the vertical and horizontal slices), as illustrated in the graph 300 of Figure 3. Thus, Figure 3 shows how a Radio Access Network (RAN) can be sliced into horizontal and vertical slices according to an embodiment that is alternative (or additional) to that shown in Figure 1, where the slices are totally independent in terms of traffic flow and operation. The graph 300 of Figure 1 has Network Hierarchy 302 (i.e. the network layers involved/in use) along the y-axis, and Radio Resource 304 (i.e. indicative of using separate radio resources, such as frequencies, time slots, etc.) along the x-axis. In the example of Figure 1, vertical slicing is shown as comprising four vertical slices 306. However, any number of different markets/use-cases may be involved. The four vertical markets/use-cases shown chosen for the vertical slices are mobile broadband (MBB) 110, a vehicle type communication (V2X) 120, a first machine type communication (MTC-1) 130, a second machine type communication (MTC-2) 140, being slices Slice#1-Slice#4, respectively. These are only exemplary choices of the use-cases that could be served.

Also shown in Figure 3 is horizontal slicing, in this example again comprising four horizontal slices 308. The four horizontal slices shown are macro network layer 210, micro network layer 220, device to device network layer 230, and Personal Area Network (PAN) (e.g. wearable) network layer 240. According to an example, each horizontal slice contains a portion of multiple vertical slices. Equally, each vertical slice contains a portion of each horizontal slice. The separate portions, as separated in both the horizontal and vertical directions may be referred to as a slice portion. Thus, in the example of Figure 1, the MBB vertical slice 110 comprises four slice portions: Macro Network layer portion 112; Micro Network layer portion 114; D2D Network layer portion 116; and PAN Network layer portion 118. Similarly, V2X vertical slice 120 comprises four slice portions: Macro Network layer portion 122; Micro Network layer portion 124; D2D Network layer portion 126; and PAN Network layer portion 128. Meanwhile, the MTC-1 vertical slice 130 comprises four slice portions: Macro Network layer portion 132; Micro Network layer portion 134; D2D Network layer portion 136; and PAN Network layer portion 138, and MTC-2 vertical slice 140 comprises four slice portions: Macro Network layer portion 142; Micro Network layer portion 144; D2D Network layer portion 146; and PAN Network layer portion 148.

An example of such an architecture is, in a personal area network, a wearable health sensor may belong to a dedicated health network. The personal area network layer may then represent a horizontal network slice. The health sensor running under the coverage of the personal area network may belong to a vertical network slice. In the same token, each horizontal network slice could comprise multiple vertical network slices. Each vertical network slice may have multiple horizontal network slices. Another example is a macro cell (i.e. macro eNB) that serves a number of different use-case communications. Likewise, each vertical slice may contain portions of multiple horizontal slices, for example, in a V2X network, there may be V2I and V2V layers. In another example, the mobile broad band (MBB) vertical slice includes portions in each of the macro, micro and device to device layers, as shown. Thus, embodiments provide a way to logically carve up the wireless resources provided by, and/or in use by, the radio access network, according to both use-case (vertically) and network layer (horizontally).

Communication and computation have been helping each other in pushing the boundaries of information and computing technologies. At the network side, computation has been used to help communication by moving computation and storage to the edge. With edge cloud and edge computation, the communication link between the source and the destination is getting shorter, thereby improving the communication efficiency and reducing the amount of information propagation in the network. The optimal deployment of edge cloud and computation scheme varies. As a general rule, the less capable the end device is and/or the higher the device density, the closer the cloud and computation to the network edge.

Moving forward at the device side, with the devices further shrinking in size from portable devices to wearable devices and the user expectation on computation keeping increasing, we expect future communications to help to deliver the user experience, e.g., the network nodes slice out part of their computation resources to help computation at the portable device, while the portable devices slice out part of their computation resources to help the computation at the wearable devices. In this way, the network is horizontally sliced. The sliced out computation resources and the air interface connecting the two ends form an integrated part that delivers the required service.

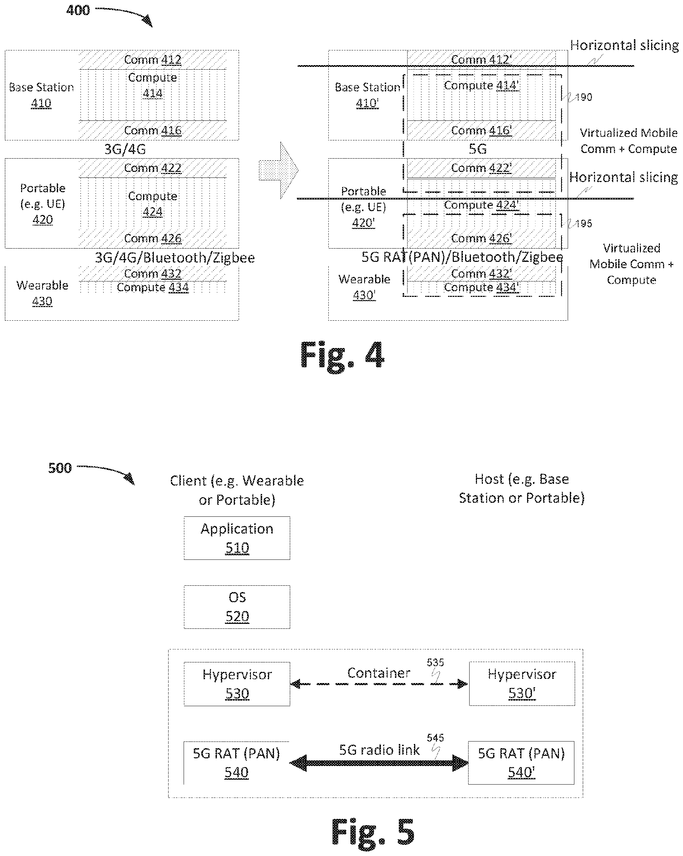

Figure 4 shows a more detailed example of horizontal slicing in a sliceable wireless network architecture according to embodiments. The left hand side shows the traditional 3G/4G architecture (but only from the RAN down). This comprises a base station portion 410, comprising an up-stream/core network side communication function 412, a base station compute function 414 (i.e. the processing resources available in the base station, or closely coupled entity thereof), and a down-stream/wireless/device side communication function 416 (to communicate with the devices being served by that base station, or other, peer base station, e.g. in the case of fronthaul, etc.). There is also shown a portable portion 420 (e.g. a User Equipment, or a like device) comprising a similar combination of up-stream and down-stream communication resources and local processing resources. In this case, the up-stream communication link is the typical cellular wireless communication link 422 (e.g. OFDM/CDMA/LTE type link) and a down-stream communication link 426 such as a 5G radio access technology (RAT) (e.g. OFDM/CDMA/LTE type link), a next generation communication link(s) such as a 5G PAN RAT (yet to be created), or a current or next generation other PAN wireless communication technology, e.g. Bluetooth, zigbee or the like. In between is the local compute function 424, i.e. processing resources local to the portable device. Lastly, in the example, there is the wearable portion 430, which typically has only a single up-stream communications link 432 and limited local processing resources function 434.

The right hand side of figure 4 shows the one of the new proposed horizontal network slicing concepts, in particular, how the processing resources of higher and lower entities in the network can be "combined", i.e. shared between themselves, using the communications and processing resource abilities of the entities taking part. The basic functions are similar, therefore are denoted as items 410' to 434' respectively, and act in similar ways. However, there is now the concept of horizontal slices, in this case, showing the horizontal slices #1 190 and #2 195 of Figure 1 in more detail. In this basic example, the wearable device 430' is able to make use of the processing resources 424' of portable device 420', by using the communications functions to share processing data (e.g. data to process and the resultant processed data). Similarly, the portable device 420' is able to use the base station 410' processing resources 414'.

There will now follow more detailed description of a portion of the network slicing concept, according to the present disclosure. In some example, these functions may be provided as new network function (NFs), which may be virtualized in some cases, e.g. by using network function virtualization (NFV). These NFs and NFVs may be slice specific, or operate over multiple/all slices. The proposed wireless network, both as a whole (e.g. including the core network), but particularly the RAN will now be slice aware, by making use of a newly implemented slice identification.

Network slicing is an important technology capability of Fifth Generation (5G) wireless networks. With network slicing, one physical wireless network infrastructure can be sliced into multiple logical wireless networks, each architected and optimized for desired vertical applications or services. Such network slicing may be a least partially implemented using software defined core networks though virtualization technology and in the radio air interface through resource partition and applying tailored radio access scheme. Slicing may be implemented with virtualization technology applied across radio access networks and portable devices, and across portable devices to wearable devices. For example, the computing resources in the base station and the portable device(s) (e.g. UEs) may be horizontally sliced, and these horizontal slices may be used together with lower layer device(s) (e.g. wearable device), i.e. integrated together to form a virtual computing platform though a new 5G air interface designed to significantly augment the computing capability of future portable and wearable devices, using their respective higher layer devices (e.g. base station and portable devices, respectively). Figure 1 illustrates this possible future network evolution trend.

The example embodiments provide architectural designs for such future horizontal network slicing, and enabling technologies. Specifically, the example embodiments may include the following: 1) horizontal slicing; 2) system architecture with horizontal slicing and computation resource sharing; and 3) procedures of implementing horizontal slicing and computation resource sharing.

Computation offloading has been developed in the past. However, the historic form of computation offloading has been part of the application program development, therefore the execution is above and/or at the operating system (OS), and such a solution is not scalable, as application programing is platform-capability dependent. Moreover, different computing partition(s) may result in different application program instances. This does not allow the dynamic or adaptive tradeoff of computation and communication for optimal platform performance in terms of power consumption. However, such benefits are possible with the disclosed horizontal slicing implementation(s).

Figure 5 shows a device system architecture 500 implementing a horizontal slicing and computation resource sharing. The main building blocks may include the hypervisor 530, the radio access technology 540 running on the modem and/or baseband, the data container 535 and the radio link 545 connecting the devices, e.g. a host and a client. The hypervisor may be a distinct entity operating below the traditional OS 520 and application layers 510. In the example shown in figure 5, the host has a corresponding hypervisor 530' and radio access technology 540'. The radio access technologies 540 and 540' may be any existing or developed wireless communication technologies, such as but not limited to wide area network (WAN) fourth generation (4G) wireless technologies, such as OFDM/CDMA, or may be a personal area network (PAN) wireless technology, either some new form developed as part of the fifth generation (5G) development process (i.e. a 5G PAN RAT), or may be a current of future development of another existing PAN wireless technology such as Bluetooth, Zigbee or the like. In any case, the disclosed horizontal slicing concept is effectively radio access technologies 540 and 540' agnostic, as long as they are operable to convey data between devices in data containers as described.

Hypervisor is located beneath the OS 520. Hypervisor 530 comprises of a host side 530' and a client side 530, for example resident in disjoint mobile platforms. It will be apparent that in some specific implementations, the host and client may be seen simply as first and second devices, and may be interchanged, and the requirements and directions of computational offloading are reversed, either temporarily or permanently (for the life of a particular session). The host may be located where the application is launched. When the application computing requirement is to exceed the client platform's (current) capability, or it may be more cost beneficial to offload the processing to the host side. In such a situation, the OS 520 or optionally the application 510 can indicate to the client hypervisor 530 through the OS 520 to instruct the client hypervisor 530 for taking action. The host hypervisor 530' may have pre-authorized the client for privilege to accommodate the client hypervisor 530 request and allocate computing and communication resources at the host to client's requirements. This process can be set up at the platform initialization time (e.g., during the pairing process) or in real time on demand. Host hypervisor 530' and client hypervisor 530 may dynamically partition the computing and communication resources for the virtualized mobile computing and communication platform, according to the requirements of the particular session parameters. When there is executable software that may be shared between the host and the client, the software exchange is transported inside the data container (or a new rendition, e.g. second/newer instance, of the same sort/format of data container). The exchange may be implemented by the following procedure:
1) The Client packs the executable software into Container A (a first data container);
2) Container A is multiplexed with user traffic and exchanged over the 5G air link 545 to the host through the modem/baseband;
3) The host deploys Container A and executes;
4) The host packs the execution outcome into Container B (a second data container) and transmits it back to the client via the radio link; and
5) The client deploys Container B and applies the execution outcome.

The communication layer (the modem and/or baseband) may treat the data container as a block of data without processing. The interaction between the hypervisor 530/530' and the radio link control can apply the following two options:
1) The hypervisor explicitly signals to the radio link indicating the communication requirements. The air link control then allocations appropriate channel, radio access scheme to transmit the container based on the requirements; and
2) The hypervisor cites the header of the container accordingly for the modem layer to decode and match to the channel and radio access scheme accordingly.

In various embodiments, hypervisor may direct the operation of the modem/baseband. In other embodiments, the hypervisor and the modem/baseband are peers, in which cases there may be a handshake process between the hypervisor and the modem/baseband, in order to determine the session parameters and the like.

As used herein, the term RAN control entity may be any circuit, logic or circuitry suitable for and arranged to carry out the disclosed methods and control functions. The term "logic", "circuit" and "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

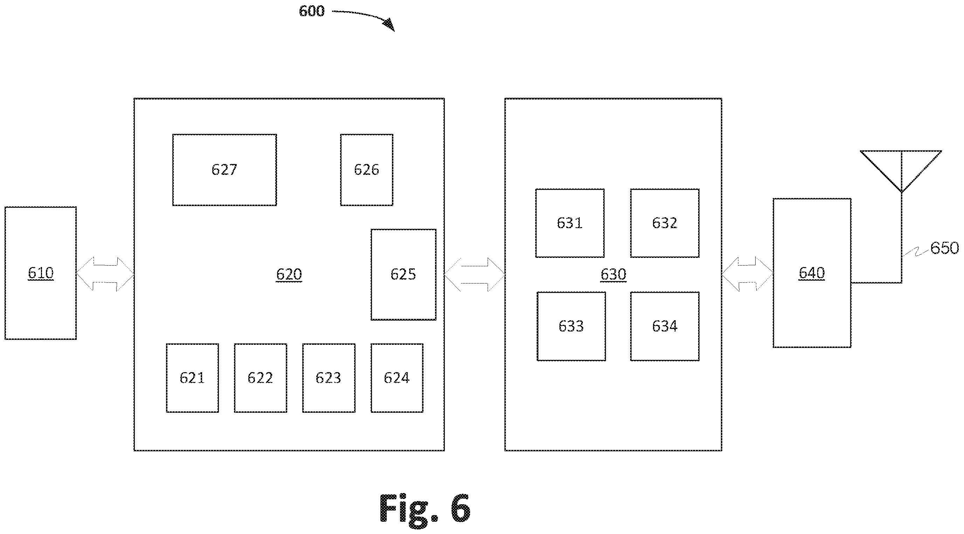

Embodiments described herein may be implemented into a system using any suitably configured hardware and/or software. Figure 6 illustrates, for one embodiment, example components of an electronic device 600, for example an implementation of a RAN control entity, or UE, according to embodiments. In embodiments, the electronic device 600 may be, implement, be incorporated into, or otherwise be a part of a user equipment (UE), base station (BS) such as an evolved NodeB (eNB), a RAN controller, or some other electronic device or network entity that is capable and arranged to perform the disclosed RAN slicing methods and functions. In some embodiments, the electronic device 600 may include application circuitry 610, control circuitry, such as baseband circuitry 620, Radio Frequency (RF) circuitry 630, front-end module (FEM) circuitry 640 and one or more antennas 650, coupled together at least as shown.

The application circuitry 610 may include one or more application processors. For example, the application circuitry 610 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 620 may include circuitry such as, but not limited to, one or more single-core or multi-core processors. The baseband circuitry 620 may include one or more baseband processors and/or control logic to process baseband signals received from a receive signal path of the RF circuitry 630 and to generate baseband signals for a transmit signal path of the RF circuitry 630. Baseband processing circuity 620 may interface with the application circuitry 610 for generation and processing of the baseband signals and for controlling operations of the RF circuitry 630. For example, in some embodiments, the baseband circuitry 620 may include a second generation (2G) baseband processor 621, third generation (3G) baseband processor 622, fourth generation (4G) baseband processor 623, and/or other baseband processor(s) 624 for other existing generations, generations in development or to be developed in the future (e.g., fifth generation (5G), 6G, etc.). The baseband circuitry 620 (e.g., one or more of baseband processors 621-624) may handle various radio control functions that enable communication with one or more radio networks via the RF circuitry 630. The radio control functions may include, but are not limited to, signal modulation/demodulation, encoding/decoding, radio frequency shifting, etc. In some embodiments, modulation/demodulation circuitry of the baseband circuitry 620 may include Fast-Fourier Transform (FFT), precoding, and/or constellation mapping/demapping functionality. In some embodiments, encoding/decoding circuitry of the baseband circuitry 620 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 620 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 626 of the baseband circuitry 620 may be configured to run elements of the protocol stack for signaling of the PHY, MAC, RLC, PDCP and/or RRC Layers. In some embodiments, the baseband circuitry may include one or more audio digital signal processor(s) (DSP) 627. The audio DSP(s) 627 may be include elements for compression/decompression and echo cancellation and may include other suitable processing elements in other embodiments.

The baseband circuitry 620 may further include memory/storage 625. The memory/storage 625 may be used to load and store data and/or instructions for operations performed by the processors of the baseband circuitry 620. Memory/storage for one embodiment may include any combination of suitable volatile memory and/or non-volatile memory. The memory/storage 625 may include any combination of various levels of memory/storage including, but not limited to, read-only memory (ROM) having embedded software instructions (e.g., firmware), random access memory (e.g., dynamic random access memory (DRAM)), cache, buffers, etc. The memory/storage 625 may be shared among the various processors or dedicated to particular processors.

Components of the baseband circuitry may be suitably combined in a single chip, a single chipset, or disposed on a same circuit board in some embodiments. In some embodiments, some or all of the constituent components of the baseband circuitry 620 and the application circuitry 610 may be implemented together such as, for example, on a system on a chip (SOC).

In some embodiments, the baseband circuitry 620 may provide for communication compatible with one or more radio technologies. For example, in some embodiments, the baseband circuitry 620 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 620 is configured to support radio communications of more than one wireless protocol may be referred to as multi-mode baseband circuitry.

RF circuitry 620 may enable communication with wireless networks using modulated electromagnetic radiation through a non-solid medium. In various embodiments, the RF circuitry 630 may include switches, filters, amplifiers, etc. to facilitate the communication with the wireless network. RF circuitry 630 may include a receive signal path which may include circuitry to down-convert RF signals received from the FEM circuitry 640 and provide baseband signals to the baseband circuitry 620. RF circuitry 630 may also include a transmit signal path which may include circuitry to up-convert baseband signals provided by the baseband circuitry 620 and provide RF output signals to the FEM circuitry 640 for transmission.

In some embodiments, the RF circuitry 630 may include a receive signal path and a transmit signal path. The receive signal path of the RF circuitry 630 may include mixer circuitry 631, amplifier circuitry 632 and filter circuitry 633. The transmit signal path of the RF circuitry 630 may include filter circuitry 633 and mixer circuitry 631. RF circuitry 630 may also include synthesizer circuitry 634 for synthesizing a frequency for use by the mixer circuitry 631 of the receive signal path and the transmit signal path. In some embodiments, the mixer circuitry 631 of the receive signal path may be configured to down-convert RF signals received from the FEM circuitry 640 based on the synthesized frequency provided by synthesizer circuitry 634. The amplifier circuitry 632 may be configured to amplify the down-converted signals and the filter circuitry 633 may be a low-pass filter (LPF) or band-pass filter (BPF) configured to remove unwanted signals from the down-converted signals to generate output baseband signals. Output baseband signals may be provided to the baseband circuitry 620 for further processing. In some embodiments, the output baseband signals may be zero-frequency baseband signals, although this is not a requirement. In some embodiments, mixer circuitry 631 of the receive signal path may comprise passive mixers, although the scope of the embodiments is not limited in this respect.

In some embodiments, the mixer circuitry 631 of the transmit signal path may be configured to up-convert input baseband signals based on the synthesized frequency provided by the synthesizer circuitry 634 to generate RF output signals for the FEM circuitry 640. The baseband signals may be provided by the baseband circuitry 620 and may be filtered by filter circuitry 633. The filter circuitry 633 may include a low-pass filter (LPF), although the scope of the embodiments is not limited in this respect.

In some embodiments, the mixer circuitry 631 of the receive signal path and the mixer circuitry 631 of the transmit signal path may include two or more mixers and may be arranged for quadrature downconversion and/or upconversion respectively. In some embodiments, the mixer circuitry 631 of the receive signal path and the mixer circuitry 631 of the transmit signal path may include two or more mixers and may be arranged for image rejection (e.g., Hartley image rejection). In some embodiments, the mixer circuitry 631 of the receive signal path and the mixer circuitry 631 may be arranged for direct downconversion and/or direct upconversion, respectively. In some embodiments, the mixer circuitry 631 of the receive signal path and the mixer circuitry 631 of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 630 may include analog-to-digital converter (ADC) and digital-to-analog converter (DAC) circuitry and the baseband circuitry 620 may include a digital baseband interface to communicate with the RF circuitry 630.

In some dual-mode embodiments, a separate radio IC circuitry may be provided for processing signals for each spectrum, although the scope of the embodiments is not limited in this respect.

In some embodiments, the synthesizer circuitry 634 may be a fractional-N synthesizer or a fractional N/N+1 synthesizer, although the scope of the embodiments is not limited in this respect as other types of frequency synthesizers may be suitable. For example, synthesizer circuitry 634 may be a delta-sigma synthesizer, a frequency multiplier, or a synthesizer comprising a phase-locked loop with a frequency divider.

The synthesizer circuitry 634 may be configured to synthesize an output frequency for use by the mixer circuitry 631 of the RF circuitry 630 based on a frequency input and a divider control input. In some embodiments, the synthesizer circuitry 634 may be a fractional N/N+1 synthesizer.

In some embodiments, frequency input may be provided by a voltage controlled oscillator (VCO), although that is not a requirement. Divider control input may be provided by either the baseband circuitry 620 or the applications processor 610 depending on the desired output frequency. In some embodiments, a divider control input (e.g., N) may be determined from a look-up table based on a channel indicated by the applications processor 610.

Synthesizer circuitry 634 of the RF circuitry 630 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 634 may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 630 may include an IQ/polar converter.

FEM circuitry 640 may include a receive signal path which may include circuitry configured to operate on RF signals received from one or more antennas 650, amplify the received signals and provide the amplified versions of the received signals to the RF circuitry 630 for further processing. FEM circuitry 640 may also include a transmit signal path which may include circuitry configured to amplify signals for transmission provided by the RF circuitry 630 for transmission by one or more of the one or more antennas 650.

In some embodiments, the FEM circuitry 640 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 630). The transmit signal path of the FEM circuitry 640 may include a power amplifier (PA) to amplify input RF signals (e.g., provided by RF circuitry 630), and one or more filters to generate RF signals for subsequent transmission (e.g., by one or more of the one or more antennas 650).

In some embodiments, the electronic device 600 may include additional elements such as, for example, memory/storage, display, camera, sensor, and/or input/output (I/O) interface.

In some embodiments, the electronic device of Figure 6 may be configured to perform one or more processes, techniques, and/or methods as described herein, or portions thereof.

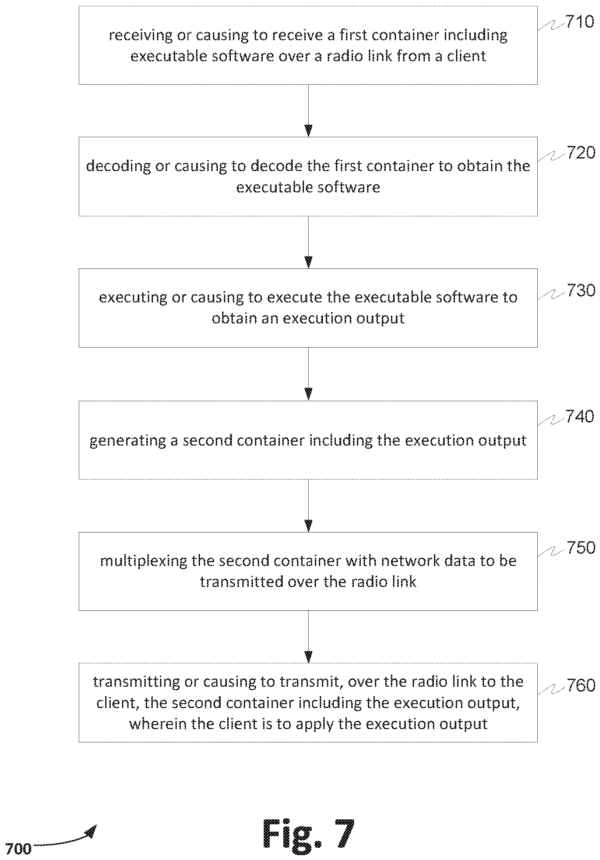

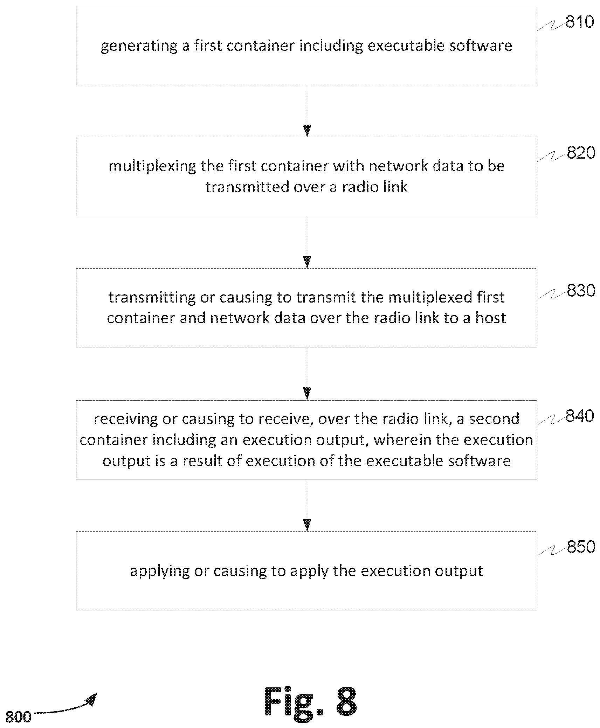

Figures 7 and 8 show example methods of communication in a wireless network that may be performed according to the present disclosure, for example by a host or a client device.

The example method 700 of Figure 7 may comprise receiving or causing to receive a first container including executable software over a radio link from a client 710, decoding or causing to decode the first container to obtain the executable software 720, and executing or causing to execute the executable software to obtain an execution output 730. The method may further comprise generating a second container, including the execution output 740, and multiplexing the second container with network data to be transmitted over the radio link 750. Finally, the method may further comprise transmitting or causing to transmit the second container, including the execution output, over the radio link to the client, wherein the client is to apply the execution output 760.

The example method 800 of Figure 8 may comprise generating a first container including executable software 810, and multiplexing the first container with network data to be transmitted over a radio link 820. The method may further comprise transmitting, or causing to transmit, the multiplexed first container and network data over the radio link to a host 830, and then receiving or causing to receive a second container, including an execution output, over the radio link, wherein the execution output is a result of execution of the executable software 840. Finally, the method may further comprise applying or causing to apply the execution output 850.

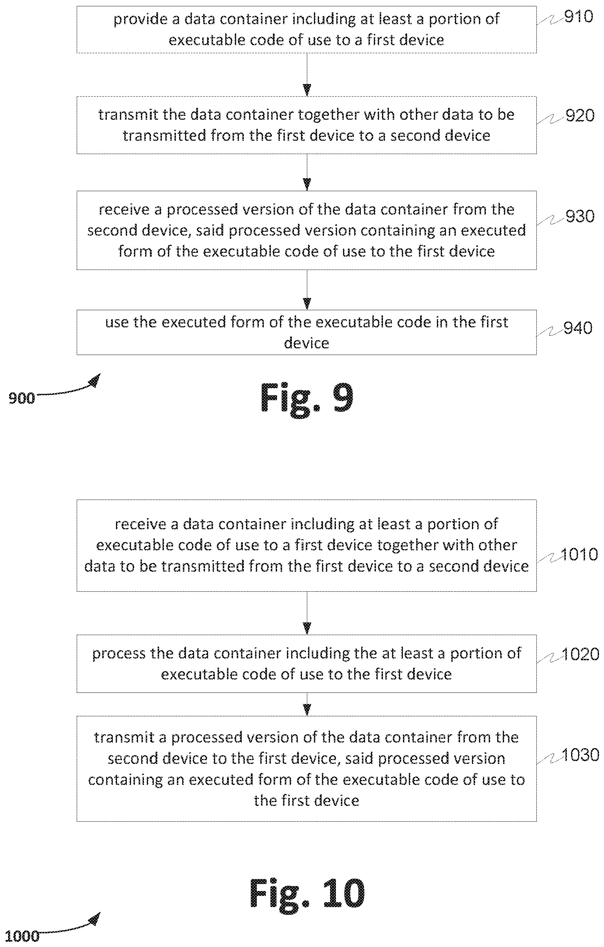

Figures 9 and 10 show example methods that a device (for example, either as a host or client) as described herein may carry out in a wireless network.

In the example method 900 of Figure 9, a device for use in a first wireless network device operating within a wireless network may receive at least one communication originating from a second wireless network device, or transmit at least one communication to the second wireless network device. The method may further comprise providing a data container including at least a portion of executable code of use to the first device 910, transmitting the data container together with other data to be transmitted from the first device to the second device 920. The method may further comprise receiving a processed version of the data container from the second device, said processed version containing an executed form of the executable code of use to the first device 930 and using the executed form of the executable code in the first device 940.

In the example method 1000 of Figure 10, a device for use in a first wireless network device operating within a wireless network may receive at least one communication originating from a second wireless network device, or transmit at least one communication to the second wireless network device. The method may further comprise receiving a data container including at least a portion of executable code of use to the first device, together with other data to be transmitted from the first device to the second device 1010, processing the data container including the at least a portion of executable code of use to the first device 1020, and transmitting a processed version of the data container from the second device to the first device, said processed version containing an executed form of the executable code of use to the first device 1030.

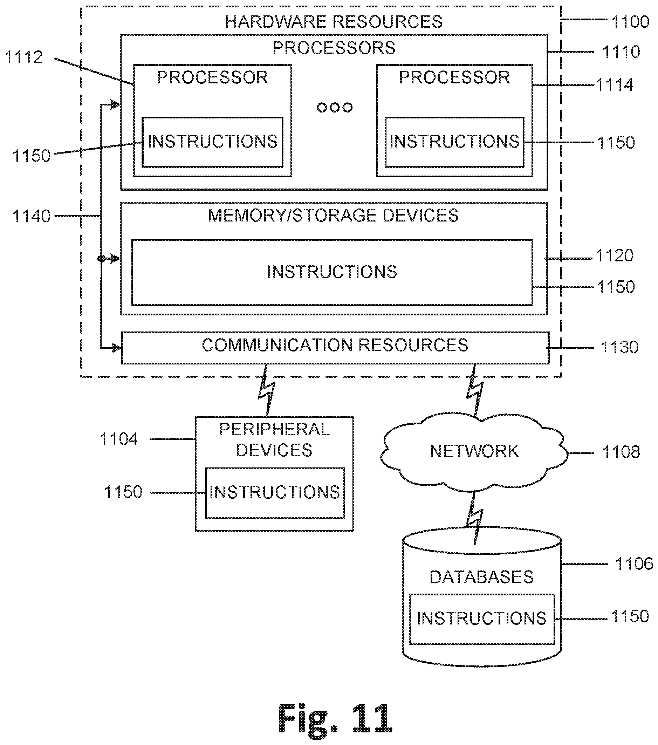

Figure 11 is a block diagram illustrating components, according to some example embodiments, able to read instructions from a machine-readable or computer-readable medium (e.g., a machine-readable storage medium) and perform any one or more of the methodologies discussed herein. Specifically, Figure 11 shows a diagrammatic representation of hardware resources 1100 including one or more processors (or processor cores) 1110, one or more memory/storage devices 1120, and one or more communication resources 1130, each of which are communicatively coupled via a bus 1140.

The processors 1110 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 1112 and a processor 1114. The memory/storage devices 1120 may include main memory, disk storage, or any suitable combination thereof.

The communication resources 1130 may include interconnection and/or network interface components or other suitable devices to communicate with one or more peripheral devices 1104 and/or one or more databases 1106 via a network 1108. For example, the communication resources 1130 may include wired communication components (e.g., for coupling via a Universal Serial Bus (USB)), cellular communication components, Near Field Communication (NFC) components, Bluetooth^{®} components (e.g., Bluetooth^{®} Low Energy), Wi-Fi^{®} components, and other communication components.

Instructions 1150 may comprise software, a program, an application, an applet, an app, or other executable code for causing at least any of the processors 1110 to perform any one or more of the methodologies discussed herein. The instructions 1150 may reside, completely or partially, within at least one of the processors 1110 (e.g., within the processor's cache memory), the memory/storage devices 1120, or any suitable combination thereof. Furthermore, any portion of the instructions 1150 may be transferred to the hardware resources 1100 from any combination of the peripheral devices 1104 and/or the databases 1106. Accordingly, the memory of processors 1110, the memory/storage devices 1120, the peripheral devices 1104, and the databases 1106 are examples of computer-readable and machine-readable media.

Examples use-cases/types of communications may include: Wireless/Mobile Broadband (MBB) communications; Extreme Mobile Broadband (E-MBB) communications; Real-time use-case such as Industrial Control communications, Machine-to-Machine communications (MTC/MTC1); non-real-time use-case, such as Internet-of-Things (IoT) sensors communications, or massive-scale Machine-to-Machine communications (M-MTC/MTC2); Ultra Reliable Machine-to-Machine communications (U-MTC); Mobile Edge Cloud, e.g. caching, communications; Vehicle-to-Vehicle (V2V) communications; Vehicle-to-Infrastructure (V2I) communications; Vehicle-to-anything communications (V2X). This is to say, the present disclosure relates to providing network slicing according to any readily definable/distinguishable type of communication that can be carried out over a wireless network.

In some examples, the radio access network (RAN) control entity is distributed across portions of the RAN. In some examples, the portions of RAN are the base stations (e.g. eNBs) of the RAN, in others, the portion(s) of the RAN may be a UE, or any other device being or to be served by the wireless network/RAN, or forming part of (or serving) the same, e.g. mobility management engine (MME), baseband unit (BBU), remote radio head (RRH) or, etc. In some examples, if the RAN control entity is physically distributed, the RAN control entity can be collocated with the macro BS, and only manage the slice portions that under the coverage of the macro BS. In some examples, if the RAN control entity is in a central location, the RAN control entity can manage a slice portion across multiple BSs which are under the coverage of the RAN control entity. The RAN control entity may comprise at least a portion controlling allocation of RAN, or device, resources according to a requirement of the one or more horizontal or vertical slices, for example computational resources at/in, or available to, a device in the wireless network.

As herein described, where an example or claim recites RF circuitry, for example, to form a greater entity within the wireless network, e.g. a base station, this is also intended to cover the or an alternative embodiment which does not include the RF circuitry, for example for use in (or to provide) a distributed form of entity according to the disclosure. This may be applicable, for example, when the entity forms part of a Cloud RAN, where the radio portions (e.g. RRH) are not co-located/within the same entity as at least a significant portion of the control function (entity, module, etc.) , e.g. BBU. Thus, no embodiments are intended to be restricted to only those having an RF portion that sends or receives messages to or form the wireless network. For example, some implementations may be part of front-haul capabilities, which may be the connections to radio front ends (e.g. RRHs) from a centralized, or more centralized baseband function (e.g. BBU).

As used herein, any reference to computer program product or computer readable medium, may include reference to both transitory (e.g. physical media) and non-transitory forms (e.g. signals or data structures thereof).

Various examples disclosed herein may provide many advantages, for example, but not limited to: providing full(er) coverage for the devices being served, for any given amount of core network and/or RAN resources (e.g. computing, radio, etc); less control signaling delay and signaling exchange overhead among transmission points; providing improved coverage and at the same time reducing control signaling exchange among network nodes (inc. transmission points); a more efficient (overall, or substantial portion of a) wireless network, for example because, it allows a given amount of (e.g. a single) physical radio access network infrastructure to be used by multiple use-cases, thereby resulting in less hardware/infrastructure than would otherwise be used (e.g. double, or more, hardware, for example to provide separate physical radio access network infrastructure for each use case); generally improved radio access network performance, efficiency, reliability, maintaining/maintenance of service and quality of service, for all devices operating across the RAN, and within each slice of the RAN.

As herein described, turn-on, activation or logical separation, or the like, of the, or a, network slice may be equivalent to one another, and the terms used inter-changeably. Similarly, the turn-off, deactivation or logical desperation, or the like, of a network slice may all be equivalent to one another, and the terms used inter-changeably. A network slice may also be referenced as a logically separate (separated, partitioned, etc.) radio network access, or as a logically separate (separated, partitioned, etc.) radio network access portion. A device being, or to be served by the physical radio access network infrastructure, or a network slice may include a UE, however any and all other forms of devices that may be served are also interchangeable with a reference to a UE herein. A device may be referenced as a wireless network device. However, a wireless network device as used herein may also reference a serving entity, such as base station, MME, BBU, RRH, etc., dependent on context of use. Operationally, in terms of the disclosed network slicing, an access point and base station may be considered similar in use or deployment.

As herein described, specific examples have been used to explain the disclosed methods and functions (and function units that carry out those functions), however, the disclosure is not so limited. For example, embodiments of the disclosure is/are not limited to any specific example, such as: where a specific vertical market is disclosed in relation to a Figure, this is only an example, and any vertical market may be used instead; where a specific portion of a slice is disclosed in relation to a Figure, any portion of a slice may be used instead; where a RAN has been disclosed as having a certain size, type or number of slices (horizontal or vertical) in relation to a Figure, any size, type or number of slices may be used instead; where a slice or slice portion has been disclosed as having a certain size, type or number (in the horizontal or the vertical) in relation to a Figure, any size, type or number of slice or slice portion may be used instead. Also, in the foregoing, whilst a numbering scheme for the slices has been applied starting from 1, other numbering schemes may also be implemented, e.g. the numbers may start from 0 instead, such that Slice# 1 may be Slice#0, and the like. Thus, the specific numbers are not limiting, other than by showing an exemplary distinction between slices (by being differently numbered) or an exemplary relation between numbered slice portions (by being consecutively numbered sub-parts of the same numbered slice).

As used herein, the term "hypervisor" may be implemented in hardware, firmware, and/or software (or a combination thereof). As used herein, "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware or software components, including a one or more virtual machines that can provide the described functionality. In some embodiments, the circuitry may be implemented in, or functions associated with the circuitry may be implemented by, one or more software or firmware modules. In some embodiments, circuitry may include logic, at least partially operable in hardware. In some embodiment, the processing/execution may be distributed instead of centralized processing/execution.

As used herein, any reference to a (RAN) architecture may include anything that may be defined as or thought of as any form of specific process(es), technique(s), technology(ies), implementation detail, improvement in or type of operation of a wireless network (or similar networking system entity), particularly in the RAN. Architectures may be typically introduced, maintained and updated in the standards documents for the respective wireless network technologies in use, for example the third generation partnership project (3GPP) standards, and the like.

It will be appreciated that any of the disclosed methods (or corresponding apparatuses, programs, data carriers, etc.) may be carried out by either a host or client, depending on the specific implementation (i.e. the disclosed methods/apparatuses are a form of communication(s), and as such, may be carried out from either 'point of view', i.e. in corresponding to each other fashion). Furthermore, it will be understood that the terms "receiving" and "transmitting" encompass "inputting" and "outputting" and are not limited to an RF context of transmitting and receiving radio waves. Therefore, for example, a chip or other device or component for realizing embodiments could generate data for output to another chip, device or component, or have as an input data from another chip, device or component, and such an output or input could be referred to as "transmit" and "receive" including gerund forms, that is, "transmitting" and "receiving", as well as such "transmitting" and "receiving" within an RF context.

As used in this specification, any formulation used of the style "at least one of A, B or C", and the formulation "at least one of A, B and C" use a disjunctive "or" and a disjunctive "and" such that those formulations comprise any and all joint and several permutations of A, B, C, that is, A alone, B alone, C alone, A and B in any order, A and C in any order, B and C in any order and A, B, C in any order. There may be more or less than three features used in such formulations.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

Unless otherwise explicitly stated as incompatible, or the physics or otherwise of the embodiments, example or claims prevent such a combination, the features of the foregoing embodiments and examples, and of the following claims may be integrated together in any suitable arrangement, especially ones where there is a beneficial effect in doing so. This is not limited to only any specified benefit, and instead may arise from an "ex post facto" benefit. This is to say that the combination of features is not limited by the described forms, particularly the form (e.g. numbering) of the example(s), embodiment(s), or dependency of the claim(s). Moreover, this also applies to the phrase "in one embodiment", "according to an embodiment" and the like, which are merely a stylistic form of wording and are not to be construed as limiting the following features to a separate embodiment to all other instances of the same or similar wording. This is to say, a reference to 'an', 'one' or 'some' embodiment(s) may be a reference to any one or more, and/or all embodiments, or combination(s) thereof, disclosed. Also, similarly, the reference to "the" embodiment may not be limited to the immediately preceding embodiment.

In the foregoing, reference to 'layer' may be a reference to a predefined (or definable) portion of the infrastructure, whereas reference to 'Layer' may be a reference to a network protocol Layer in operation on/in the network infrastructure, or portion thereof. As used herein, a vertical slice may be referenced as or related to a vertical market segment. As used herein, any machine executable instructions may carry out a disclosed method, and may therefore be used synonymously with the term method. As used herein, the term disjoint may be used as dissimilar, heterogeneous, or otherwise not the same or same amount/level/capability of the respective measure or thing, or it may be used to mean distinct or separate.

## Claims

1. Machine executable instructions arranged, when executed by one or more than one processor, to implement a method to be performed by a client, the method comprising:
generating (810) a first container including executable software;
multiplexing (820) the first container with network data to be transmitted over a radio link;
transmitting or causing to transmit (830) the multiplexed first container and network data over the radio link to a host;
receiving or causing to receive (840) from the host, over the radio link, a second container including an execution output, wherein the execution output is a result of execution of the executable software performed by the host; and
applying or causing to apply (850) the execution output, wherein the client comprises a client hypervisor (530) operating below the operating system and the application layer to provide a header of the first container for baseband circuitry to decode and match the first container to a corresponding channel and radio access scheme.

2. The machine executable instructions of claim 1, wherein a process including a request for allocation and an allocation of computing and communication resources is set up between the hypervisor of the client and the hypervisor of the host during platform initialization or in real time per demand.

3. The machine executable instructions of claim 2, wherein the client is disposed in a wearable user equipment, UE.

4. The machine executable instructions of any preceding claim, wherein the hypervisor of the client is to explicitly signal to baseband circuitry and/or radio frequency, RF, circuitry indicating communication requirements, wherein the baseband circuitry and/or RF circuitry is to control allocation of appropriate channel and radio access schemes to transmit the first container.

5. The machine executable instructions of any preceding claim, wherein the hypervisor of the client is to direct one or more operations of the baseband circuitry.

6. The machine executable instructions of any preceding claim, wherein the hypervisor of the client and the baseband circuitry are peers that are to perform handshake processes for transmitting the first container and/or receiving the second container.

7. The machine executable instructions of claim 1, additionally comprising machine executable instructions arranged, when executed by one or more than one processor, to implement a method to be performed by the client, the method comprising receiving or causing to receive, by a hypervisor of the client, an instruction to take a specified action when computing requirements of the application exceed a platform capability of the client or based on one or more other criteria.

8. Machine executable instructions arranged, when executed by one or more than one processor, to implement a method to be performed by a host, the method comprising:
receiving or causing to receive (710) a first container including executable software over a radio link from a client;
decoding or causing to decode (720) the first container to obtain the executable software;
executing or causing to execute (730) the executable software to obtain an execution output;
generating (740) a second container including the execution output;
multiplexing (750) the second container with network data to be transmitted over the radio link; and
transmitting or causing to transmit (760), over the radio link to the client, the second container including the execution output, wherein the client is to apply the execution output, wherein the host comprises a host hypervisor (530') operating below the operating system and the application layer to receive a header of the first container for baseband circuitry to decode and match the first container to a corresponding channel and radio access scheme.

9. The machine executable instructions of claim 8, additionally comprising machine executable instructions arranged, when executed by one or more than one processor, to implement a method to be performed by a host, the method comprising:
obtaining (730) the executable software from the first container;
executing (730) the executable software to obtain the execution output; and generating (740) the second container including the execution output.

10. The machine executable instructions of claim 8, additionally comprising machine executable instructions arranged, when executed by one or more than one processor, to implement a method to be performed by a host, wherein the host is located where an application is launched.

11. The machine executable instructions of claim 8, additionally comprising machine executable instructions arranged, when executed by one or more than one processor, to implement a method to be performed by a host, the method comprising receiving or causing to receive, by the hypervisor of a host, a request for allocation of computing and communication resources from the hypervisor of the client, wherein a portion of the hypervisor including the host has authorization to accommodate the client hypervisor request for allocation of computing and communication resources.

12. The machine executable instructions of claim 8, additionally comprising machine executable instructions arranged, when executed by one or more than one processor, to implement a method to be performed by a host, and the host is disposed in a portable UE; and is to take place during a pairing process between the wearable UE and the portable UE.

13. The machine executable instructions of claim 9, additionally comprising machine executable instructions arranged, when executed by one or more than one processor, to implement a method to be performed by a host, wherein the client is disposed in a portable UE and the host is disposed in an evolved NodeB, eNB, or wherein the client is disposed in a wearable user equipment, UE, and the host is disposed in a portable UE.

## Patentansprüche

1. Maschinenausführbare Anweisungen, die, wenn sie von einem oder mehr als einem Prozessor ausgeführt werden, angeordnet sind, um ein Verfahren zu implementieren, das von einem Client durchgeführt werden soll, wobei das Verfahren umfasst:
Erzeugen (810) eines ersten Containers, der ausführbare Software enthält;
Multiplexen (820) des ersten Containers mit Netzwerkdaten, die über eine Funkverbindung übertragen werden sollen;
Übertragen oder Veranlassen zum Übertragen (830) des gemultiplexten ersten Containers und von Netzwerkdaten über die Funkverbindung an einen Host;
Empfangen oder Veranlassen zum Empfangen (840) vom Host über die Funkverbindung eines zweiten Containers, der einen Ausführungsausgang enthält,
wobei der Ausführungsausgang ein Ergebnis der Ausführung der ausführbaren Software ist, die vom Host durchgeführt wird; und
Anwenden oder Veranlassen zum Anwenden (850) des Ausführungsausgangs, wobei der Client einen Client-Hypervisor (530) umfasst, der unterhalb des Betriebssystems und der Anwendungsschicht arbeitet, um einen Header des ersten Containers für Basisbandschaltungen bereitzustellen, um den ersten Container zu decodieren und an ein entsprechendes Kanal- und Funkzugangsschema anzupassen.

2. Maschinenausführbare Anweisungen nach Anspruch 1, wobei ein Prozess, der eine Anforderung zur Zuweisung und eine Zuweisung von Rechen- und Kommunikationsressourcen enthält, zwischen dem Hypervisor des Clients und dem Hypervisor des Hosts während der Plattforminitialisierung oder in Echtzeit pro Nachfrage eingerichtet wird.

3. Maschinenausführbare Anweisungen nach Anspruch 2, wobei der Client in einem tragbaren Benutzergerät, UE, angeordnet ist.

4. Maschinenausführbare Anweisungen nach einem der vorhergehenden Ansprüche, wobei der Hypervisor des Clients Basisbandschaltungen und/oder Funkfrequenz-, RF-, Schaltungen explizit signalisieren soll, die Kommunikationsanforderungen anzeigen, wobei die Basisbandschaltungen und/oder RF-Schaltungen die Zuweisung von geeigneten Kanal- und Funkzugangsschemata steuern sollen, um den ersten Container zu übertragen.

5. Maschinenausführbare Anweisungen nach einem der vorhergehenden Ansprüche, wobei der Hypervisor des Clients eine oder mehrere Operationen der Basisbandschaltungen anweisen soll.

6. Maschinenausführbare Anweisungen nach einem der vorhergehenden Ansprüche, wobei der Hypervisor des Clients und die Basisbandschaltungen Peers sind, die Handshake-Prozesse zum Übertragen des ersten Containers und/oder Empfangen des zweiten Containers durchführen sollen.

7. Maschinenausführbare Anweisungen nach Anspruch 1, zusätzlich umfassend maschinenausführbare Anweisungen, die, wenn sie von einem oder mehr als einem Prozessor ausgeführt werden, angeordnet sind, um ein Verfahren zu implementieren, das vom Client durchgeführt werden soll, wobei das Verfahren das Empfangen oder Veranlassen umfasst, durch einen Hypervisor des Clients eine Anweisung zu empfangen, eine spezifizierte Aktion durchzuführen, wenn Rechenanforderungen der Anwendung eine Plattformfähigkeit des Clients überschreiten oder auf einem oder mehreren anderen Kriterien basieren.

8. Maschinenausführbare Anweisungen, die, wenn sie von einem oder mehr als einem Prozessor ausgeführt werden, angeordnet sind, um ein Verfahren zu implementieren, das von einem Host durchgeführt werden soll, wobei das Verfahren umfasst:
Empfangen oder Veranlassen zum Empfangen (710) eines ersten Containers, der ausführbare Software enthält, über eine Funkverbindung von einem Client;
Decodieren oder Veranlassen zum Decodieren (720) des ersten Containers, um die ausführbare Software zu erhalten;
Ausführen oder Veranlassen zum Ausführen (730) der ausführbaren Software, um einen Ausführungsausgang zu erhalten;
Erzeugen (740) eines zweiten Containers, der den Ausführungsausgang enthält;
Multiplexen (750) des zweiten Containers mit Netzwerkdaten, die über die Funkverbindung übertragen werden sollen; und
Übertragen oder Veranlassen zum Übertragen (760), über die Funkverbindung an den Client, des zweiten Containers, der den Ausführungsausgang enthält, wobei der Client den Ausführungsausgang anwenden soll, wobei der Host einen Host-Hypervisor (530') umfasst, der unterhalb des Betriebssystems und der Anwendungsschicht arbeitet, um einen Header des ersten Containers für Basisbandschaltungen zu empfangen, um den ersten Container zu decodieren und mit einem entsprechenden Kanal und Funkzugangsschema anzupassen.

9. Maschinenausführbare Anweisungen nach Anspruch 8, zusätzlich umfassend maschinenausführbare Anweisungen, die, wenn sie von einem oder mehr als einem Prozessor ausgeführt werden, angeordnet sind, um ein Verfahren zu implementieren, das von einem Host durchgeführt werden soll, wobei das Verfahren umfasst: Erhalten (730) der ausführbaren Software vom ersten Container;
Ausführen (730) der ausführbaren Software, um den Ausführungsausgang zu erhalten; und Erzeugen (740) des zweiten Containers, der den Ausführungsausgang enthält.

10. Maschinenausführbare Anweisungen nach Anspruch 8, zusätzlich umfassend maschinenausführbare Anweisungen, die, wenn sie von einem oder mehr als einem Prozessor ausgeführt werden, angeordnet sind, um ein Verfahren zu implementieren, das von einem Host durchgeführt werden soll, wobei sich der Host dort befindet, wo eine Anwendung gestartet wird.

11. Maschinenausführbare Anweisungen nach Anspruch 8, zusätzlich umfassend maschinenausführbare Anweisungen, die, wenn sie von einem oder mehr als einem Prozessor ausgeführt werden, angeordnet sind, um ein Verfahren zu implementieren, das von einem Host durchgeführt werden soll, wobei das Verfahren das Empfangen oder Veranlassen zum Empfangen, durch den Hypervisor eines Hosts, einer Anforderung zur Zuweisung von Rechen- und Kommunikationsressourcen vom Hypervisor des Clients umfasst, wobei ein Teil des Hypervisors, der den Host enthält, eine Autorisierung hat, um die Client-Hypervisor-Anforderung zur Zuweisung von Rechen- und Kommunikationsressourcen aufzunehmen.

12. Maschinenausführbare Anweisungen nach Anspruch 8, zusätzlich umfassend maschinenausführbare Anweisungen, die, wenn sie von einem oder mehr als einem Prozessor ausgeführt werden, angeordnet sind, um ein Verfahren zu implementieren, das von einem Host durchgeführt werden soll, und der Host in einem tragbaren UE angeordnet ist; und während eines Paarungsprozesses zwischen dem tragbaren UE und dem portablen UE stattfinden soll.

13. Maschinenausführbare Anweisungen nach Anspruch 9, zusätzlich umfassend maschinenausführbare Anweisungen, die, wenn sie von einem oder mehr als einem Prozessor ausgeführt werden, angeordnet sind, um ein Verfahren zu implementieren, das von einem Host durchgeführt werden soll, wobei der Client in einem portablen UE angeordnet ist und der Host in einem evolved NodeB, eNB, angeordnet ist, oder wobei der Client in einem tragbaren Benutzergerät, UE, angeordnet ist und der Host in einem portablen UE angeordnet ist.

## Revendications

1. Instructions exécutables par machine agencées pour, lorsqu'elles sont exécutées par un ou plus d'un processeur, implémenter un procédé devant être mis en œuvre par un client, le procédé comprenant :
la génération (810) d'un premier conteneur comprenant du logiciel exécutable ;
le multiplexage (820) du premier conteneur avec des données de réseau à transmettre sur une liaison radio ;
la transmission ou l'incitation à la transmission (830) à un hôte, sur la liaison radio, du premier conteneur multiplexé et des données de réseau ;
la réception ou l'incitation à la réception (840), de l'hôte, sur la liaison radio, d'un second conteneur comprenant un résultat d'exécution, le résultat d'exécution étant un résultat de l'exécution du logiciel exécutable mise en œuvre par l'hôte ; et
l'application ou l'incitation à l'application (850) du résultat d'exécution, où le client comprend un hyperviseur de client (530) mis en œuvre au-dessous du système d'exploitation et de la couche applicative pour produire un entête du premier conteneur destiné à une circuiterie de bande de base pour décoder et faire correspondre le premier conteneur à un canal et à un mécanisme d'accès radio correspondants.

2. Les instructions exécutables par machine de la revendication 1, dans lesquelles un processus incluant une requête d'allocation et une allocation de ressource de calcul et de communication est établi entre l'hyperviseur du client et l'hyperviseur de l'hôte pendant une initialisation de plateforme ou en temps réel à la demande.

3. Les instructions exécutables par machine de la revendication 2, dans lesquelles le client est situé dans un équipement utilisateur, UE, à porter sur soi.

4. Les instructions exécutables par machine de l'une des revendications précédentes, dans lesquelles l'hyperviseur du client sert à signaler de façon explicite à la circuiterie de bande de base et/ou à une circuiterie radiofréquence, RF, des indications d'exigences de communication, la circuiterie en bande de base et/ou la circuiterie RF servant à contrôler une allocation d'un canal et des mécanismes d'accès radio appropriés à la transmission du premier conteneur.

5. Les instructions exécutables par machine de l'une des revendications précédentes, dans lesquelles l'hyperviseur du client sert à diriger une ou plusieurs opérations de la circuiterie de bande de base.

6. Les instructions exécutables par machine de l'une des revendications précédentes, dans lesquelles l'hyperviseur du client et la circuiterie de bande de base sont des pairs qui servent à mettre en œuvre des processus de poignée de main pour l'émission du premier conteneur et/ou la réception du second conteneur.

7. Les instructions exécutables par machine de la revendication 1, comprenant en outre des instructions exécutable par machine agencées pour, lorsqu'elles sont exécutées par un ou plus d'un processeur, implémenter un procédé destiné à être mis en œuvre par le client, le procédé comprenant la réception ou l'incitation à la réception, par un hyperviseur du client, d'une instruction d'effectuer une action spécifiée lorsque les exigences de calcul de l'application dépassent une capacité de plateforme du client, ou sur la base d'un ou plusieurs autres critères.

8. Les instructions exécutables par machine agencées pour, lorsqu'elles sont exécutées par un ou plus d'un processeur, implémenter un procédé destiné à être mis en œuvre par un hôte, le procédé comprenant :
la réception ou l'incitation à la réception (710) d'un premier conteneur comprenant du logiciel exécutable, sur une liaison radio en provenance d'un client ;
le décodage ou l'incitation au décodage (720) du premier conteneur pour obtenir le logiciel exécutable ;
l'exécution ou l'incitation à l'exécution (730) du logiciel exécutable pour obtenir un résultat d'exécution ;
la génération (740) d'un second conteneur incluant le résultat d'exécution ;
le multiplexage (750) du second conteneur avec des données de réseau à transmettre sur la liaison radio ; et
la transmission ou l'incitation à la transmission (760) au client, sur la liaison radio, du second conteneur incluant le résultat d'exécution, où le client sert à appliquer le résultat d'exécution, où l'hôte comprend un hyperviseur d'hôte (530') mis en œuvre au-dessous du système d'exploitation et de la couche applicative pour recevoir un entête du premier conteneur pour qu'une circuiterie de bande de base décode et fasse concorder le premier conteneur à un canal et à un schéma d'accès radio correspondants.

9. Les instructions exécutables par machine de la revendication 8, comprenant en outre des instructions exécutables par machine agencées pour, lorsqu'elles sont exécutées par un ou plus d'un processeur, implémenter un procédé destiné à être mis en œuvre par un hôte, le procédé comprenant :
l'obtention (730) du logiciel exécutable à partir du premier conteneur ;
l'exécution (730) du logiciel exécutable pour obtenir le résultat d'exécution ; et
la génération (740) du second conteneur incluant le résultat d'exécution.

10. Les instructions exécutables par machine de la revendication 8, comprenant en outre des instructions exécutables par machine agencées pour, lorsqu'elles sont exécutées par un ou plus d'un processeur, implémenter un procédé destiné à être mis en œuvre par un hôte, l'hôte étant localisé là où est lancée une application.

11. Les instructions exécutables par machine de la revendication 8, comprenant en outre des instructions exécutables par machine agencées pour, lorsqu'elles sont exécutées par un ou plus d'un processeur, implémenter un procédé destiné à être mis en œuvre par un hôte, le procédé comprenant la réception ou l'incitation à la réception, par l'hyperviseur d'un hôte, d'une requête d'allocation de ressource de calcul et de communication en provenance de l'hyperviseur du client, une partie de l'hyperviseur incluant l'hôte étant autorisé à satisfaire la requête de l'hyperviseur du client pour l'allocation de ressources de calcul et de communication.

12. Les instructions exécutables par machine de la revendication 8, comprenant en outre des instructions exécutables par machine agencées pour, lorsqu'elles sont exécutées par un ou plus d'un processeur, implémenter un procédé destiné à être mis en œuvre par un hôte, et l'hôte étant situé dans un UE portable ; et qui doit avoir lieu lors d'un processus de jumelage entre l'UE à porter sur soi et l'UE portable.

13. Les instructions exécutables par machine de la revendication 9, comprenant en outre des instructions exécutables par machine agencées pour, lorsqu'elles sont exécutées par un ou plus d'un processeur, implémenter un procédé destiné à être mis en œuvre par un hôte, dans lequel le client est situé dans un UE portable et l'hôte est situé dans un noeud B amélioré, eNB, ou dans lequel le client est situé dans un équipement utilisateur, UE, à porter sur soi et l'hôte est situé dans un UE portable.
